# EUROPEAN PATENT APPLICATION

(11) **EP 1 198 113 A1**
(43) Date of publication of application: **17.04.2002**
(21) Application number: 00203529.3
(22) Date of filing: 13.10.2000
(51) Int. Cl.: H04M 3/42, H04Q 7/38, H04Q 7/22

(54) **Intelligent Call Manager for routing calls to subscriber's fixed or mobile telephone according to availability**

(71) Applicant: Dansk Mobiltelefon I/S, 9000 Aalborg (DK)
(72) Inventor: Praestgaard, Alf, 8270 Hoejbjerg (DK)
(74) Representative: Elmeros, Claus

(57) **Abstract**

The invention relates to a telecommunication network
said network comprising at least one subscriber (S1,..,S4), said at least one subscriber (S1,..,S4) being associated with
at least one fixed telephone device (FT) and at
least one mobile communication device (MD)
said network comprising means for determining the availability of at least one fixed telephone means (FT) and at least one mobile communication device (MD) associated with at least one subscriber (S1,..,S4).

The invention facilitates advantageous integration between the mobile telecommunication devices and the fixed telephone devices of a local network.

## Description

### Field of the invention

The present invention relates to a
- a telecommunication network as stated in claim 1
- a method of handling at least one incoming call as stated in claim 9
- a method of handling at least one incoming call to a least one subscriber as stated in claim 10
- a method of controlling a telecommunication network as stated in claim 11
- a method of determining the availability of at least one subscriber as stated in claim 12
- a switchboard system as stated in claims 13 and 14, and a
- a method of managing subscribers as stated in claim 15.

### Background of the invention

Many methods of managing local telecommunication networks are known within prior art. Local communication networks may typically imply a fixed telephone network, each fixed telephone being arranged and addressed at a certain location within e.g. an office. Moreover, local communication networks may comprise a number of mobile telephones, typically less integrated in the system. The present invention deals with telecommunication networks comprising both fixed telephones and mobile telephones.

Recently, some techniques within the technical field offer a certain degree of integration between fixed telephones and mobile telephones in the sense that these techniques have been applied for the purpose of linking the mobile telephones to the fixed terminals e.g. by means of Bluetooth or IR linking (e.g. DECT telephones).

Generally, such communication networks lack integration in the sense that integration is primarily concentrated on linking the local system to the ambient telecommunication network.

### Summary of the invention

The invention relates to a telecommunication network
according to claim 1, said network comprising at least one subscriber (S1,..,S4), said at least one subscriber (S1,..,S4) being associated with a subscriber domain (SD1,..SD4) comprising
at least one fixed telephone device (FT) and at
least one mobile telecommunication device (MD)
said network comprising means (ICM) for determining the availability of at least one said fixed telephone means (FT) and at least one mobile communication device (MD) associated with at least one of the subscribers (S1,..,S4).

According to the invention, a subscriber domain should typically be regarded as a combination of at least one fixed network-based device and at least one mobile network device.

The association of subscribers in a "local" network comprising a number of subscriber domains managed by an intelligent call manager may be regarded as a virtual "local" network as the telecommunication devices of the subscriber domains are in fact not local. The fixed telephone devices may often and sometimes preferably be perceived as a local network of fixed devices associated with mobile devices that are in no way local due to the mobile nature of the devices. Nevertheless, the intelligent call manager may administer the devices in a such a way that the ambient calling party may perceive the network to be completely integrated between the fixed network and the mobile network.

A fixed telephone device may e.g. be a standard wired telephone, a DECT telephone, a LAN-PBX telephone or the like.

A mobile telecommunication device may e.g. be a mobile telephone operated by a GSM-, a GPRS, a UMTS network , NMT,.. etc. Evidently, the mobile telephones may e.g communicate by means of WAP or I-mode protocol.

Typically, a virtual "local" network may be a telecommunication network covering a company, a business unit or equivalents. The systems may advantageously (but not necessarily) be of a dimension which may be serviced by a manually operated attendant service due to the fact the especially a manually operated attendant service may benefit from the provided availability information.

When, as stated in claim 2, at least one of said subscriber domains comprises at least one mobile communication device or at least one fixed telecommunication device, a further advantageous embodiment of the invention has been obtained.

According to the above-mentioned embodiment of the invention, a virtual "local" network comprising at least one domain, comprising at least one fixed telecommunication device and at least one mobile telecommunication device, may be supplemented by additional domains comprising fixed telecommunication devices or mobile telecommunication devices.

Still, the complete "local" virtual network should preferably comprise subscriber domains which may all be checked for availability by the intelligent call manager.

The means (ICM) for determining the availability of at least one of said fixed telephone means (FT) and at least one mobile communication device (MD) associated with said at least one subscriber (S1,..,S4) may also be regarded as an intelligent call manager in some aspects.

When, as stated in claim 3, said means (ICM) for determining the availability of at least one of said fixed telephone means (FT) comprises means for checking at least one register (REG2) associated with said fixed telephone means (FT1, FT2), a further advantageous embodiment of the invention has been obtained.

Evidently, information about the availability of fixed telephone means may be registered and stored in numerous ways, e.g. in relational databases, registers dedicated solely to a specific device, etc.

When, as stated in claim 4, said availability of at least one subscriber (S) at an associated fixed telephone device is established partly or completely by means of a detection arrangement, a further advantageous embodiment of the invention has been obtained.

A possible detection arrangement within the scope of the invention may e.g. be established by means of screensaver detection on a PC serving as a LAN-PBX telephone. If the screensaver is activated, the ICM may suppose that the subscriber has left the his PC, and the state of the LAN-PBX may be registered as not available. Consequently, an incoming call should be directed to another available telecommunication device within the subscriber's domain.

Other possible detection and amusing arrangements within the scope of the invention may e.g. be a sensor mounted in the chair of the subscriber.

When, as stated in claim 5, the means (ICM) for determining the availability of at least one mobile communication device (MD) associated with at least one subscriber (S1,..,S4) comprises means for accessing availability codes (A-code) comprised by the mobile network, a further advantageous embodiment of the invention has been obtained.

When, as stated in claim 6, said availability codes (A-codes) are comprised by a Home Location Register (HLR) of a GSM-network, a further advantageous embodiment of the invention has been obtained.

Evidently, many possible availability codes may be applicable within the scope of the invention, and they may have many names varying from network to network.

According to a GSM network application, the availability codes (A-codes) of a mobile device may be e.g. codes determining reachability/non-reachability, or attached/de-attached and status codes.

The status code may e.g. be A Busy; subscriber busy and calling party, B Busy; subscriber Busy ― not the calling party, IDLE; subscriber is idle, Fault; subscriber is in fault mode, TEST; subscriber is in test mode.

When, as stated in claim 7, the availability is weighted by further availability parameters, a further advantageous embodiment of the invention has been obtained.

According to the invention, further availability parameters may e.g. be Outlook imported data supplementing the measured fixed and mobile availability with the schedules of the subscriber. A further parameter may e.g. office opening hours.

The availability may then be presented to a calling party or to a switchboard system operator in a more or less fancy manner or e.g. applied for automatically routing a signal to devices in the subscriber domains.

It should be emphasized that the availability may be presented to the user/calling party in several possible ways without deviating from the spirit of the invention.

One preferred embodiment of the invention implies that the possible subscriber domain states are divided into three possible states, green: the subscriber is available on the fixed or the mobile telecommunication device; yellow: the subscriber is in a meeting; red: the subscriber is neither available on the fixed telephone, nor on the mobile device.

According to further embodiments of the invention, a further state may be established indicating that the subscriber is temporarily unavailable due to the fact that he is busy on the fixed or the mobile device within his domain.

When, as stated in claim 8, the intelligent call manager (ICM) comprises display means (DM) for displaying the availability of the subscribers (S1,..,S4) managed by said call manager (ICM), a further advantageous embodiment of the invention has been obtained.

The display means may be applied in various ways within the scope of the invention due to the detailed availability information provided by the invention.

Moreover, the invention relates to a method of handling at least one incoming call to a least one subscriber (S1,..,S4) as stated in claim 9, said method comprising the steps of
- determining the availability of said at least one subscriber (S1,..,S4) on at least one fixed telephone (FT) according to at least one availability criteria (AC)
- routing the incoming call to the at least one fixed telephone (FT) of said at least one subscriber (S1,..,S4) if the subscriber is available on the at least one fixed telephone (FT),
- determining the availability of said at least one subscriber (S1,..,S4) on at least one mobile telephone (MD) according to at least one further availability criteria (FAC) if the subscriber is not available on the at least one fixed telephone (FT),
- routing the incoming call to the at least one mobile device (MD) of the subscriber (S1,..,S4) if the subscriber is available on the at least one mobile device (MD).

Moreover, the invention relates to a method of handling at least one incoming call to said a least one subscriber (S1,..,S4) as stated in claim 10, said method comprising the steps of
- determining the availability of said at least one subscriber (S1,..,S4) on the at least one fixed telephone (FT) according to at least one availability criteria (AC)
- determining the availability of said at least one subscriber (S1,..,S4) on at least one mobile telephone (MD) according to at least one further availability criteria (FAC) if the subscriber is not available on the at least one fixed telephone (FT),
- routing the incoming call to the device on which the subscriber is available.

Moreover, the invention relates to a method of controlling a telecommunication network (S1,..,S4) as stated in claim 11, said method comprising the step of
- directing an incoming call to a subscriber domain (SD) and to an available device (FT, MD) within the domain.

Moreover, the invention relates to a method of determining the availability of said at least one subscriber (S1,..,S4) as stated in claim 12, said at least one subscriber (S1,..,S4) defining a subscriber domain comprising at least one fixed telephone (FT) and at least one mobile communication device (MD)
said method comprising the steps of
(a) determining the availability of said at least one subscriber (S1,..,S4) on at least one fixed telephone (FT) according to at least one availability criteria
(b) determining the availability of said at least one subscriber (S1,..,S4) on at least one mobile communication device (MD) according to at least one additional availability criteria.

According to the invention, the availability criteria associated with the fixed telecommunication device and the additional availability criteria associated with the mobile telecommunication device may preferably comprise two different sets of parameters due to the different nature of availability of the two devices with respect to reachability and attachment.

Moreover, the invention relates to a switchboard system as stated in claim 13 for monitoring the availability of said at least one subscriber dedicated to a subscriber domain (SD), said subscriber domain comprising at least one mobile communication device (MD) and preferably at least one fixed telephone (FT),
said switchboard system comprising display means (DM) for displaying the availability of the at least one subscriber domain (SD).

According to the invention, a switchboard system should preferably involve display means in order to facilitate manual operation of the attendant service. Such manual operation may be significantly improved compared to state of the art systems, according to which no detailed information with respect to availability is actually at hand.

It should be noted that display means according to the invention may display the availability of the complete subscriber domain by displaying state of each device or only the resulting state of the subscriber domain as a whole.

Moreover, the invention relates to a switchboard system as stated in claim 14 for managing incoming calls to a local network of subscriber domains (SD), said at least one subscriber domain comprising at least one mobile communication device (MD) and preferably at least one fixed telephone (FT),
said switchboard system comprising or communicating with means for routing an incoming call automatically according to predefined automatic routines depending on the availability of the called subscriber.

According to the invention, an advantageous automatic attendant service may facilitated due to the fact that the availability of the called party, i.e. the subscriber associated with the called subscriber domain, may be determined in detail.

Moreover, the invention relates to a method of managing subscribers as stated in claim 15 (S) in a telecommunication network,
said at least one subscriber (S1,..,S4) being associated with a subscriber domain (SD1,..SD4) comprising
at least one fixed telephone device (FT) and at
least one mobile communication device (MD)
said method comprising the step of routing incoming signals from said fixed telephone device (FT) to at least one of said mobile communication devices (MD) if the fixed telephone device (FT) of a subscriber domain (SD) is unavailable.

Routing of an incoming signal to a mobile device within the same domain is defined and triggered by the ICM, and the routing should typically imply release of the incoming call e.g. by means of a CC=18 code indicating that the call is directed directly from the PSTN to the mobile device without occupying the transmission line to the ICM.

Other less convenient routing implies a so-called call forward indicating that the call is forwarded to the mobile device via the ICM, thereby maintaining the connecting between the ICM and the PSTN.

Unavailability of a communication line to a fixed telephone device may e.g. indicate that the LAN communication to the subscriber's domain is unintentionally out of order or e.g. that the subscriber has closed his fixed telephone (e.g. PC) down. However, it may also be the result of an action by the control means of the network, e.g. automatic transfer of incoming calls to the mobile communication device within the subscriber domain, if a timer device (e.g. a screensaver) has detected that the subscriber is, for instance, inactive at his work station and has probably left the work station.

### The figures

The invention will now be described in detail with reference to the drawings, in which
- figs. 1 and 2a: illustrate some basic terms applied to describe the invention and variants of the invention below.
- figs. 3a-7a and figs. 3b-7b: illustrate the structure and signal flow in a network according to one embodiment of the invention,
- fig. 8: illustrates the local network setup of a preferred embodiment of the invention,
- fig. 9: illustrates a preferred method of controlling incoming calls according to a preferred embodiment of the invention, and
- figs. 10a and 10b: illustrate possible functionalities of a manually and automatically operated attendant service, respectively.

### Detailed description

Initially, it should be emphasized that the description below focuses on examples of the invention explaining the invention to a man skilled in the art. Evidently, the examples should in no way restrict the scope of the invention from involving other exemplary devices/functions or combinations of devices/functionalities.

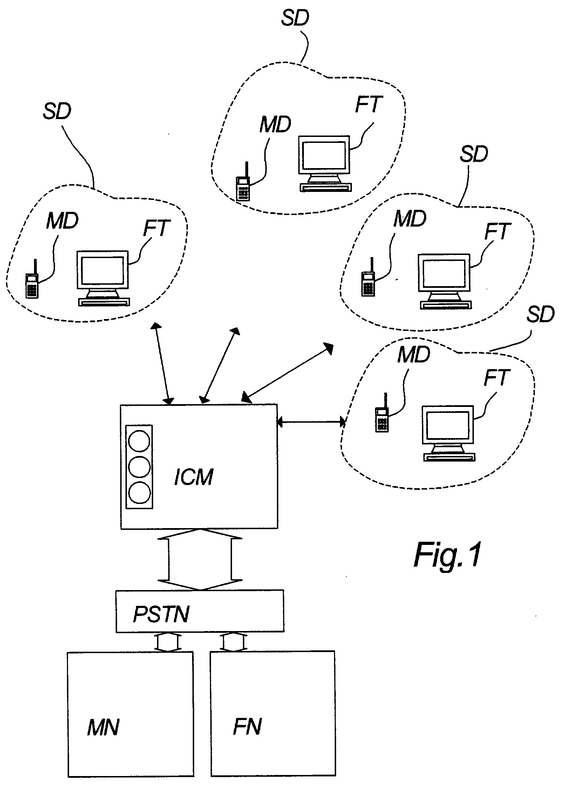

Fig. 1 illustrates some basic terms applied to describe the invention and variants thereof. Obviously, the introduced terms should in no way restrict the understanding of the terms as these terms are used in a broader sense later in the description.

The illustrated system comprises four subscriber domains SD, each comprising at least one so-called fixed telephone FT, e.g. a LAN-PBX telephone, and at least one associated mobile telephone MD, e.g. a mobile telephone.

The four subscriber domains SD communicate with the ambient telecommunication network via an intelligent call manager ICM. The nature of the communication will be described in detail below.

The ambient telecommunication network comprises at least one control server distributing the telecommunication network signals between the mobile network and the fixed network.

According to the invention, a fixed network is the network addressing the wired telephones of the network, whereas the mobile network is the network addressing the wireless telephones.

Some aspects of the invention may be explained in detail by looking at the mobile network.

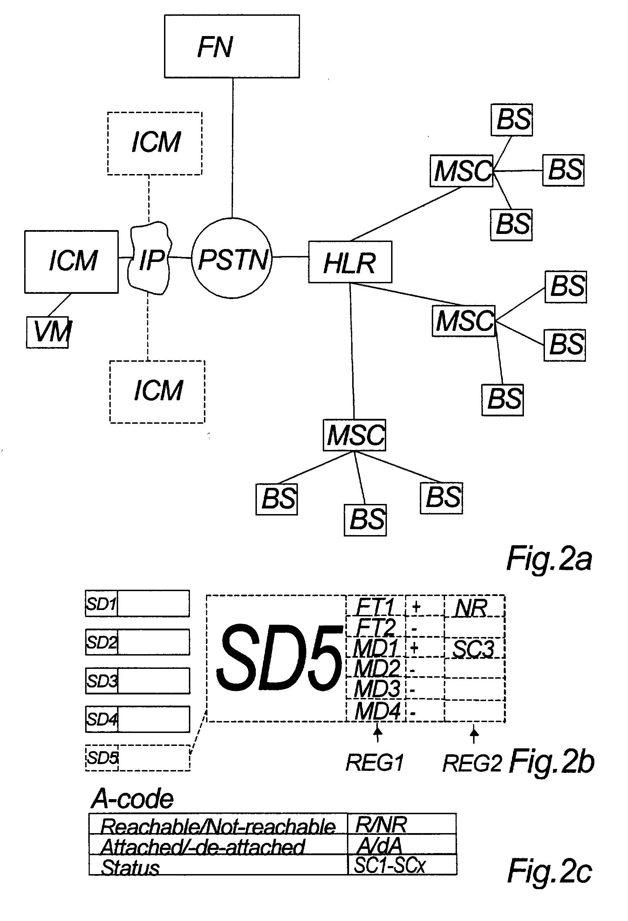

Fig. 2a illustrates the basic components of the network described in fig. 1, but now it focuses on the components of the mobile network.

The above-mentioned intelligent call manager ICM is connected to a number fixed local telephones FT. The connection may typically be wired, but may also include wireless or partly wireless connections, e.g. a DECT telephone which may be regarded as a fixed telephone. The intelligent call manager ICM represents some sort of gateway from the ambient telecommunication network to a number of subscribers. In other words, the intelligent call manager ICM administrates a number of subscriber domains, each subscriber domain comprising at least one fixed telephone, e.g. FTx, and an associated mobile telephone, e.g. MDx.

The illustrated intelligent call manager ICM is connected to a Public Switched Telephone Network, PSTN e.g. via an Internet Protocol, IP.

The PSTN functions as a node between a fixed network FN and a mobile network MN, e.g a GSM network.

It should be noted that both the mobile and the fixed networks may typically include several different networks.

The mobile network comprises a home location register HLR communicating with a number of mobile switching centers MSCs, each mobile switching center MSC communicating with a number of distributed base stations BS.

The base stations BS comprise the radio interface from the fixed part of the mobile network to a number of mobile devices MD.

As stated above, a subscriber domain administered by the intelligent call manager comprises both a fixed telephone FT, e.g. FTx, and a mobile device MD, e.g. MDx. Evidently, this administration needs some kind of communication between the intelligent call manager ICM, and the fixed/mobile network.

It should be noted that the ICM controls or manages a virtual "local" network of telephones and that several different ICM controls may be connected to the PSTN via e.g. the Internet Protocol, IP, as illustrated on the drawing. The term virtual should be understood in the sense that fixed telephones are typically locally or at least more or less directly wired to the ICM, whereas mobile devices are only virtually connected to the fixed telephones of the physical local network by means of the ICM.

It should, moreover, be noted that the mobile subscribers may be associated with an ICM independently of the physical location of the subscriber.

Finally, the ICM communicates with a local voice mailbox (VM) forming the voice mail box of the individual subscriber domains. Evidently, the ICM may be supported by alternative configurations of mailboxes (not shown), e.g. by applying the voice mailbox of the mobile devices.

Fig. 2b illustrates possible components of an ICM in the above-mentioned network according to one embodiment of the invention.

First of all, the ICM comprises a configuration setup defining a number of subscriber domains managed by the intelligent cal manager ICM.

The intelligent call manager comprises a number of registers defining the subscriber domains SD1 ― SD5 of the ICM. Evidently, the domains may be established in several other possible ways within the scope of the invention and the number of subscriber domains may be chosen so as to fit the available hardware and wishes of the customer.

Fig. 2b illustrates a particular, possible configuration of a subscriber domain SD5. According to the illustrated and chosen design of the ICM, the subscriber domain SD5 comprises a fixed telephone FT1 and a mobile device MD1 defined by the REG1 column. Moreover, the fixed telephone and the mobile device are defined by a device-specific number (not shown). With respect to the mobile device, such device number may e.g. be the mobile telephone number of the device.

Moreover, the register comprises a column REG2 defining the current state of the subscriber domain SD5 by means of availability codes A-codes.

One of many possible implementations of A-codes within the scope of the invention is disclosed in fig. 2c.

The listed Availability codes comprises a reachable/not reachable indicator R/NR, an attached/de-attached code A/dA and a status code SC1-SCx.

The status code may e.g. be A Busy; subscriber busy and calling party, B Busy; subscriber Busy ― not calling party, IDLE; subscriber is idle, Fault; subscriber is in fault mode, TEST; subscriber is in test mode.

Evidently, other status codes may chosen within the scope of the invention, and the status codes are typically chosen within e.g. the above-mentioned set of codes if the availability of a mobile subscriber has to be monitored, while other codes may be chosen to represent the status of fixed telephone.

Nevertheless, for illustrative purposes, the above-mentioned embodiment may use the same set of codes despite the fact that the term reachable/not- reachable is more or less meaningless when dealing with fixed telephones according to the common understanding of the term within the field of mobile telecommunication.

Now returning to fig. 2b, the third column monitors the status of the devices of the subscriber domain SD5. Thus, the fixed telephone FT1 representing e.g. a LAN-PBX telephone of the subscriber is not reachable, NR. Moreover, the third column indicates that the mobile device of the domain SD5 is IDLE.

Consequently, the subscriber SD5 is available, and an incoming call may be routed to the subscriber domain automatically or manually.

As illustrated above, the mobile device and the fixed device of the subscriber are "melted" together in one domain. This complete integration between the involved devices of a domain offers many benefits, such as:
- an incoming call may be routed directly to a telephone in the subscriber domain,
- an operator (if the ICM is manually operated) may inform the calling party whether the called party is actually available,
- the calling party need not know the configuration of the subscriber domain (e.g. the telephone number of the mobile device(s) within the subscriber domain), he only needs one telephone number.

The ICM may, moreover, comprise information defining the location of the voicemail of the individual subscriber domains. Moreover, this information should be supplemented by software controlling the time(s) at which an incoming call is directed to the voicemail instead of being routed to a human operator. Possible applications of the invention will be described later.

As mentioned above, the availability of the subscriber may be monitored by the intelligent call manager irrespective of whether the subscriber uses his mobile devices or fixed devices within his domain. This monitoring may subsequently be utilized for handling an incoming call.

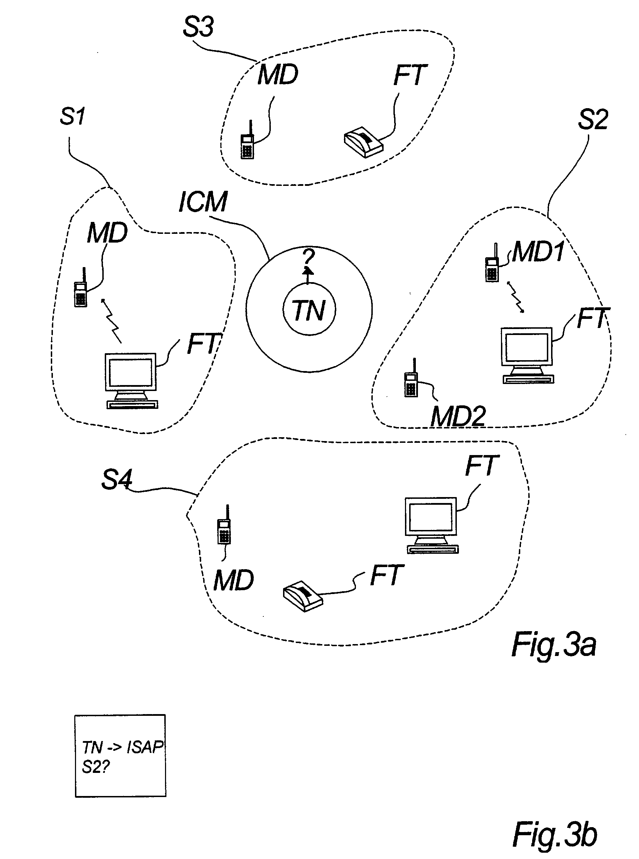

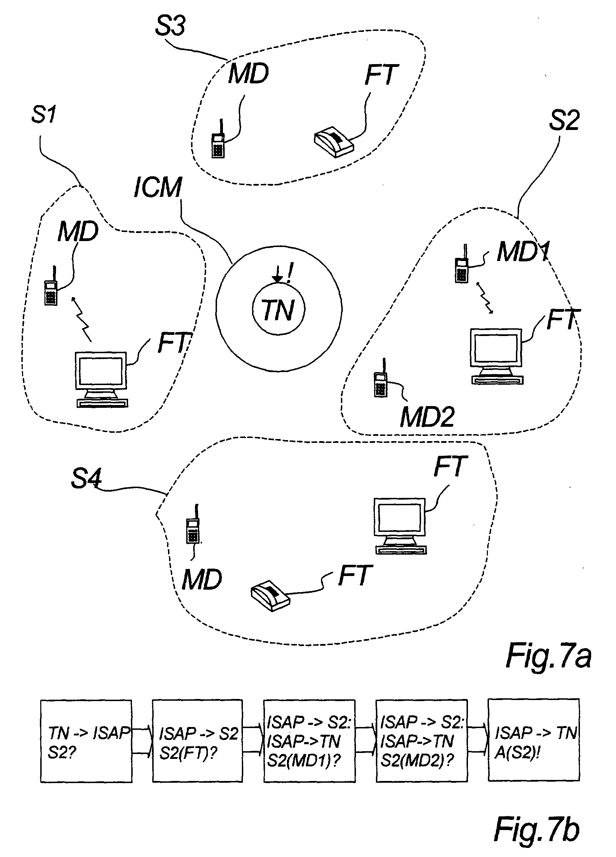

Figs. 3b ― 7b illustrate a signal flow according to one embodiment of the invention implemented in a telecommunications network as illustrated in figs. 3a- 7a. With reference to fig. 3a, the system comprises a number of subscriber domains S1 to S4.

The first subscriber domain S1 comprises a mobile device MD implemented as a mobile telephone, and a fixed telephone FT implemented as a LAN telephone. The fixed telephone FT may communicate via a Bluetooth link.

Evidently, the mobile device may be implemented as e.g. a standard mobile telephone, a WAP-device, UMTS-device, a GPRS-device or e.g. as a PDA comprising e.g. a GSM radio link.

The second subscriber domain S2 comprises a first mobile device MD1, a second mobile device MD2 and a fixed telephone FT implemented as a LAN telephone. The fixed telephone FT and the mobile device MD 1 may communicate via a Bluetooth IR link. However, the second mobile device MD2 is not directly linked to the fixed telephone FT.

According to the invention, the mobile device MD1 should be regarded as a fixed device when communicating with the LAN telephone but as a mobile device when communicating with the mobile network. A subscriber domain may consequently change nature from time to time. Such a domain may be regarded as a dynamic subscriber domain.

The third subscriber domain S3 comprises a mobile device MD and a fixed telephone FT implemented as a standard wired telephone. The fixed telephone FT and the mobile device are not directly linked.

Finally, the fourth subscriber domain S4 comprises a mobile device MD, a first fixed telephone FT1 implemented as a LAN telephone and a second fixed telephone FT2 implemented as a standard wired telephone. The fixed telephones FT1, FT2 and the mobile device MD are not mutually linked.

The four subscriber domains are all controlled by means of an intelligent call manager ICM. The platform ICM may e.g. be implemented on a local server, and the subscriber domains S1-S4 may typically be implemented in an office or as a complete corporate network.

The platform ICM manages the traffic to and from the subscriber domains S1-S4.

The platform ICM links the subscriber domains S1-S4 to a telecommunication network TN implemented according to fig. 1, i.e. comprising a wired network and a mobile telecommunications network, such as GSM.

The possible signal flow illustrated in fig. 3a will now be described with reference to fig. 3b.

Initially, the telecommunication network TN reports an incoming call to the intelligent call manager ICM. The call is intended for a second subscriber, i.e. the second subscriber domain.

With reference to fig. 3b, the telecommunication network TN asks whether (or how) the call may be delivered (S2?).

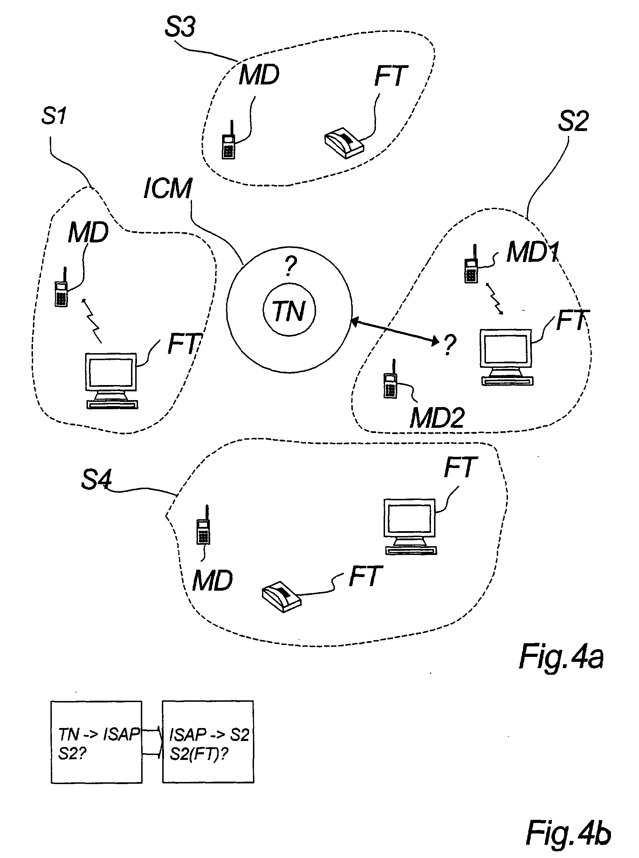

Turning now to fig. 4a and fig. 4b, the platform ICM checks whether the subscriber is available at the fixed telephone FT.

Availability is relatively easy to establish.

It should be noted that an ICM, according to the illustrated embodiment, would check the fixed telephone first, and the mobile devices secondly. Evidently, other possible check sequences may be possible within the scope of the invention.

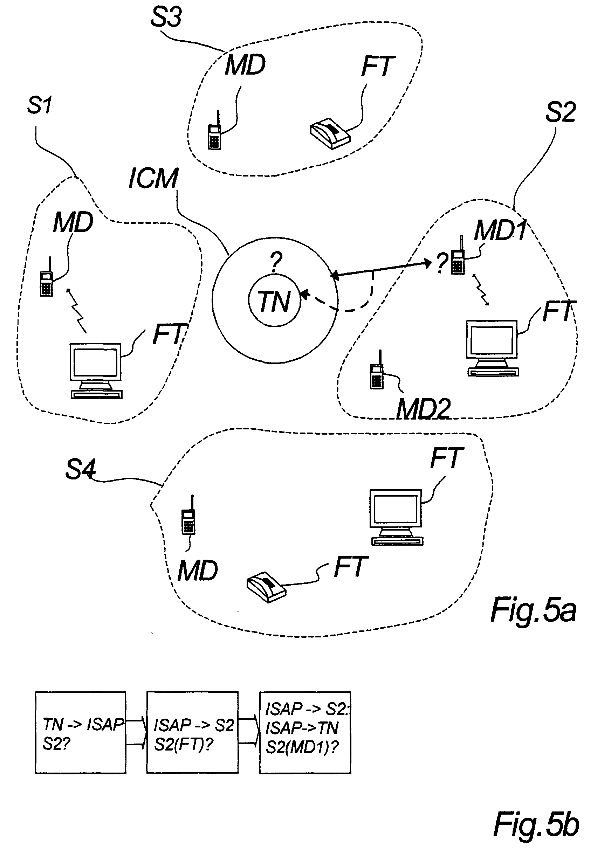

If the second subscriber is not available at the LAN-PBX telephone, the ICM will initiate a check on the mobile devices beginning with MD1 as illustrated in fig. 5a and fig. 5b.

This ICM platform may perform the availability check on the fixed device relatively easy in a local operation, as such an availability check may typically be deduced directly on the basis of the local LAN-PBX network. Availability of the fixed device may e.g. be determined by detecting the state of the screen-saver of the second subscriber's PC, whether the PC is actually turned on or simply whether the LAN-PBX link to the telephone is actually working. Preferably, the call should be routed to the fixed telecommunication device if the subscriber is available at this device. However, a call should be routed directly to another device (e.g. the mobile device) of the subscriber domain, if he is not available at the fixed device.

Determining where the subscriber is available should preferably be made automatically.

Turning now to fig. 5a and 5b, the availability of the subscriber on the first mobile device is checked.

Compared to the previous step, this check is somewhat difficult due to the fact that the ICM returns a request to the telecommunications network TN in order to access the mobile network. The request is intended to clarify whether the subscriber may be reached via his mobile phone MD1.

The availability status of the mobile device MD1 is returned to the ICM from the telecommunications network TN.

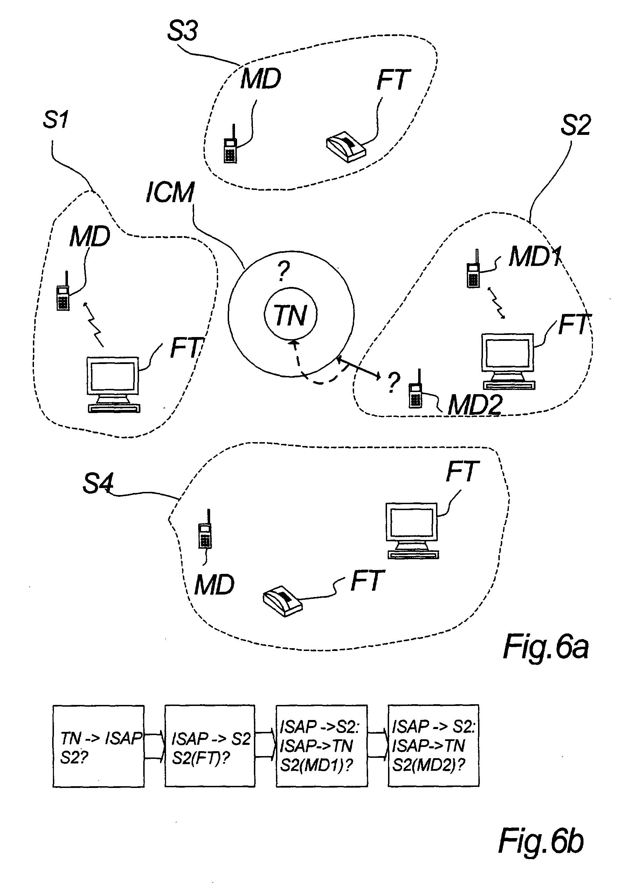

Likewise, the second mobile phone MD2 may be checked according to figs. 6a and 6b.

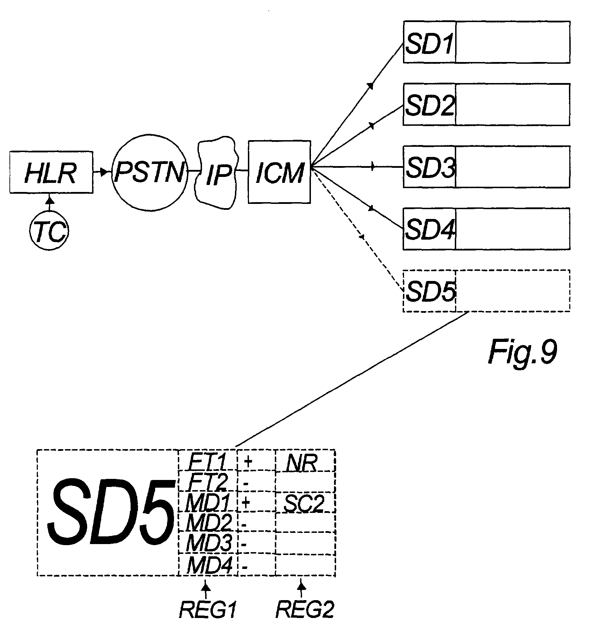

It should be noted that the availability of the mobile devices of the different subscriber domains may be updated in more or less convenient ways, e.g. by carrying out the above-mentioned request from the intelligent call manager ICM to the mobile network, or more advantageously, by an automatic update of the ICM registers being performed when changes in the availability of the mobile devices in the mobile network occur. This update method is described in fig. 9.

Finally, the ICM platform may return the status (AS2) of the second subscriber domain S2 by informing the caller (e.g. by means of a manually operated switchboard system that the second subscriber cannot be reached neither via his fixed telephone nor via his mobile devices.

Evidently, the incoming call should go directly to the second subscriber domain if the subscriber is actually available.

Evidently, several modifications within the scope of the invention may be applied with respect to the actual way of handling the incoming call depending on the desired functionality.

Hence, an incoming call may be handled completely automatically as the ICM may automatically direct the incoming call to the available second subscriber device, if any, or automatically inform the caller that the subscriber is temporarily or permanently unavailable and then direct the call to the answering machine of the second subscriber or perform another action matching the established degree of unavailability.

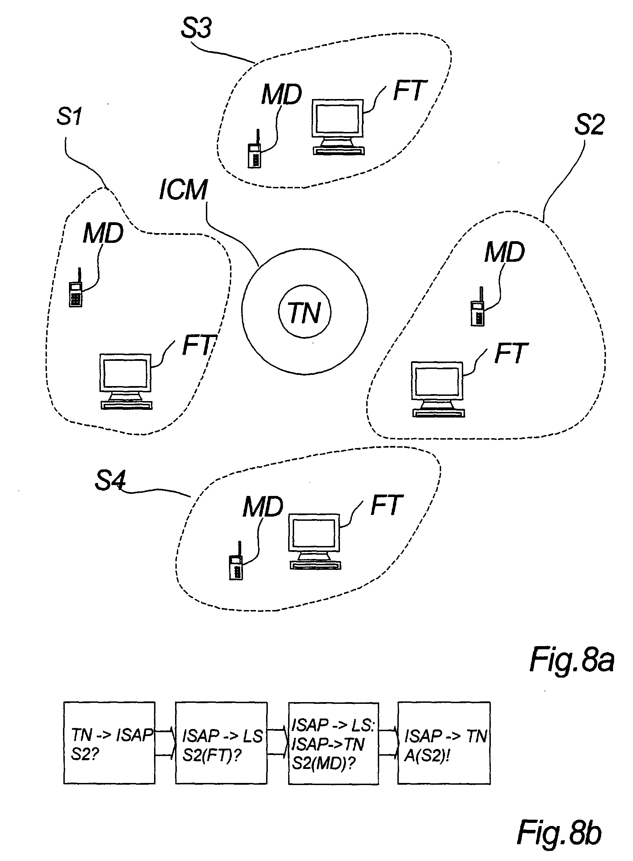

Fig. 8 illustrates the network setup of a preferred embodiment of the invention.

The preferred network setup involves a number of subscriber domains, each domain comprising a LAN-PBX telephone FT and a mobile telephone MD. According to the illustrated embodiment, no Bluetooth link is established between the fixed telephone FT and the mobile device MD.

However, such a Bluetooth link may advantageously be applied according to other embodiments of the invention.

The ICM basically controls the local network according to the above-mentioned method. Evidently, numerous methods and variants of such methods may be applied within the scope of the invention.

One variant of the platform implemented in the above-mentioned mobile telephone/LAN-PBX network according to the invention is a fall-back communication link-restoring control.

This function implies that the PSTN monitors the state of the LAN-PBX to the complete local system. If a failure in the LAN-PBX is detected, the PSTN may restore communication to the subscriber domain via the mobile radio link of the applied mobile telephone.

Such restoration of communication to a desired subscriber domain may e.g. be established by re-routing to the mobile telephone of the subscriber domain. Such a re-routing typically implies that communication from the PSTN to the ICM is not possible and is directed to the mobile device. Evidently, less convenient methods may be applied according to further variations of the invention, such as call forward typically implying that the incoming call is routed to the mobile device via the ICM.

### ICM protocol

The protocol may e.g. define the checking priority, i.e. a priority defining the sequence according to which the telecommunication devices of the subscriber should be checked and eventually accessed.

The ICM may basically be implemented primarily as local network control illustrated in the embodiment in figs. 3a-7b. Evidently, the platform may be implemented centrally in the sense that a server may be located centrally, e.g. in a GSM network operating the mobile devices included in the subscriber domains.

### Availability

Several methods may be applied to determine availability of the subscriber within his domain.

One method implies a first check at the fixed telephone(s) FT, e.g. a LAN-PBX telephone. Such check may e.g. be performed by means of a sensor arranged at the subscriber's PC, i.e. the LAN-PBX telephone. Other possible availability checks may e.g. be facilitated by means of a manual availability setting by the subscriber. Hence, the user may actively send a message to the ICM, indicating whether he is available at the fixed telephone or not. According to a preferred embodiment of the invention, the availability status of the subscriber on a fixed telephone (LAN-telephone) is determined by checking the screensaver of the subscriber's LAN-PBX terminal.

This ICM platform may perform the availability check on the fixed device relatively easy by a local operation, as such an availability check may typically be deduced directly on the basis of the local LAN-PBX network. An availability check may e.g. carried out by determining the state of the screen-saver of the second subscriber's PC, whether the PC is actually turned on or simply whether the LAN-PBX link to the telephone is actually working.

A further way of establishing or offering supplementary information regarding the availability of the fixed subscriber may e.g. be made by utilizing of a card reader (e.g. a standard card key applied for admittance control) for the purpose of determining whether the subscriber is actually available at the office or not.

Correspondingly, the availability of a subscriber on a mobile device may be determined in several different ways within the scope of the invention. According to a preferred embodiment of the invention, the availability of the subscriber at the mobile device may be determined by checking whether the mobile telephone within the area covered by the mobile network. This check may e.g. be supplemented by the inherited understanding that if the power is off, the subscriber is in a meeting or the like, i.e. temporarily not available, but actually present. Evidently, numerous syntaxes defining subscriber acts and combinations of acts may define the state of the subscriber.

Other availability criteria may be established by other measures and combinations of measures. Thus, an availability criteria of "not available - I'm in a meeting" may e.g. be established by turning the mobile telephone off.

### Attendant service area

The attendant service area of the ICM platform may likewise imply several different understandings of switchboard systems but should generally define the interface between the subscriber domains controlled by the ICM platform and the remaining network TN and vice versa.

The switchboard system may be partly or completely automated.

Such an interface may e.g. include an ICM receptionist having a switchboard system monitor, according to which the availability of a subscriber may be determined. Such a switchboard system monitor may e.g. show whether the subscriber is available to a switchboard operator and preferably also indicate the degree of non-availability. The degree of non-availability may e.g. be expressed as a statement determining whether the subscriber is actually present, but temporarily not available. The temporarily not available state may e.g. be established by the subscriber by turning the mobile telephone off while the subscriber's PC (LAN-PBX) is on.

If the subscriber has turned his PC off and the mobile phone is not within the area covered by the network or simply turned off, the subscriber is simply not available.

If a receptionist operates the switchboard system partly manually, the receptionist may simply switch an incoming call to a subscriber's mobile telephone if the subscriber is not available on the fixed telephone but available on the mobile phone. However, if the subscriber is not available, the receptionist may receive a message or link the incoming call to the answering machine of the subscriber.

Again, the calling party is spared information like "..no - he is not available right now, - but I can give you his mobile number. Maybe his mobile phone is on.."

It should be noted that the ICM, according to the illustrated embodiment would check the fixed telephone first and the mobile devices secondly. Evidently, other possible checking sequences may be possible within the scope of the invention.

If not available, the receptionist may inform the caller of the degree of non-availability of the called subscriber.

The advantage hereof is that the receptionist may offer specific information about the state of the subscriber instead of just switching the incoming call to an answering machine without checking whether the subscriber is actually available or not.

Fig. 9 illustrates a preferred method of updating an intelligent call manager ICM according to a preferred embodiment of the invention.

The update of the intelligent call manager of the invention is important due to the fact that a suitable update of the ICM ensures that the availability of the subscriber may be established swiftly and in a reliable manner.

According to the illustrated embodiment, a trigger circuit TC is associated with the home location register HLR. As mentioned in fig. 2a, the HLR communicates with the intelligent call manager ICM via the PSTN and an Internet Protocol connection according to an example of the invention. Evidently, the HLR may communicate with the ICM in numerous other ways within the scope of the invention if so desired.

According to the present preferred embodiment of the invention, the trigger circuit TC controls and triggers the transfer of availability-describing data from the mobile network to the intelligent call manager. Obviously, the mobile network may also transfer availability-describing data to a large number of different ICMs. Likewise, many different networks may work together in order to provide the necessary availability data to the intelligent call manager.

According to the illustrated embodiment of the invention, the HLR should only initiate transfer of availability data to the intelligent call manager ICM if a change in the subscriber domain SD data has occurred.

Other possible trigger mechanisms may e.g. be established on the basis of combinations of different trigger criteria such as timer-controlled triggering and event-based triggering.

A possible trigger mechanism may also be a request from the ICM to the HLR regarding the availability of a mobile subscriber or a group of subscribers managed by an ICM, and the request may e.g. be triggered by an incoming call to a subscriber having a domain administered by the ICM.

According to the illustrated embodiment, the trigger circuit has acknowledged a change of the availability status of a mobile subscriber (a mobile device) as the mobile device is no longer IDLE as described in fig. 2b but busy (SC2=B Busy: subscriber busy, subscriber not the calling party). This change is now communicated to the intelligent call manager ICM administering the subscriber domain SD5 incorporating the mobile device and the ICM modifies the register accordingly, i.e. from IDLE to SC2).

Now, the ICM may manage incoming calls accordingly, e.g. by routing incoming calls to a voice mail associated with the subscriber domain or by e.g. offering the calling party to have the call cued until the subscriber S5 is available.

Such management may be performed manually or automatically.

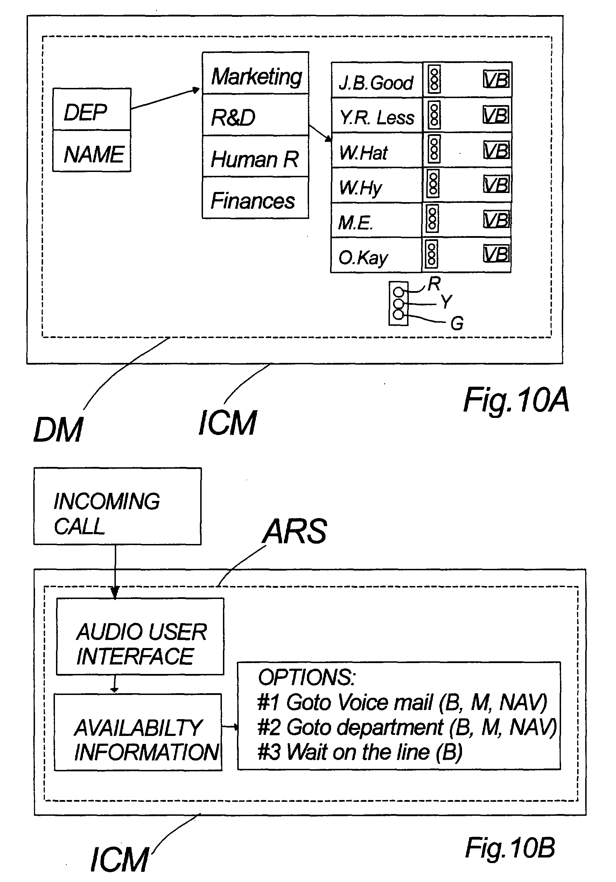

Turning now to fig. 10a, the setup of a manually operated attendant service according to an embodiment of the invention is illustrated.

The attendant service may e.g. comprise display means (DM). The display means are adapted to display the availability data to the operator in a suitable way. Evidently, the display means communicates with the aforementioned intelligent call manager ICM.

According to the illustrated sequence, a calling party has asked for a person in R&D. The operator selects the R&D department from a list of departments DEPL, and a list of persons working in the R&D department appears.

The illustrated list comprises a list of names associated with a simple "traffic light" coding: red, yellow and green, R, Y, G.

The persons marked with green are immediately available and the operator may route the incoming call directly to one of these persons, the persons marked with yellow are at the office, but in a meeting, and the persons marked with red are not available neither on their fixed telephones nor on their mobile devices.

The operator may then route the calling party to a voice mail of one of the persons by selecting a voicemail button VB.

The information to be displayed by the display means may be synchronized with calendars and schedules associated with the individual subscriber or a group of subscribers, e.g. the entire company.

Fig. 10b illustrates an automatically operated attendant service according to a further embodiment of the invention.

The illustrated sequence illustrates possible routings of an incoming call to a specific subscriber, i.e. subscriber domain.

The illustrated automatic routing system ARS based on the Intelligent Call Manager ICM deals with four different availability measures: busy B, meeting M, available AV and not available NAV.

If a calling party has dialed a number of a subscriber who is not available, the ARS may inform the calling party orally by means of an automatic Audio User Interface that the called party is either busy B at a meeting or simply not available NAV.

If the called party is busy B, the calling party may be offered to hold the line in a couple of minutes #3.

If the called party is in a meeting or not available he may be offered to speak to another available person within the department #2, or to be routed to the voicemail box of the called party.

Evidently, many other possibilities of exploiting the availability information offered by the ICM are applicable within the scope of the invention.

Thus, an advantageous feature of the invention is that the calling party of an incoming call may be handled according to actual availability and not just according to the assumption of the subscriber being reachable at his mobile number.

It should be emphasized that the above-mentioned embodiment may be subject to several variations within the scope of the invention.

It should be noted that the described way of routing a signal from one telecommunication device within one domain to another device within the same domain may sometimes be supplemented by a customized option of a preprogrammed shift from one domain to another domain if certain availability criteria are met. Thus, under certain circumstances an incoming call may be handed over to another subscriber domain if so desired.

A virtual "local" network according to the invention may typically comprise a number of subscribers ranging from anywhere between 2 to several hundreds (or thousands).

## Claims

1. Telecommunication network,
said network comprising at least one subscriber (S1,..,S4), said at least one subscriber (S1,..,S4) being associated with a subscriber domain (SD1,..SD4) comprising
at least one fixed telephone device (FT) and at
least one mobile telecommunication device (MD)
said network comprising means (ICM) for determining the availability of at least one of said fixed telephone means (FT) and at least one mobile communication device (MD) associated with at least one of the subscribers (S1,..,S4).

2. Telecommunication network according to claim 1, wherein at least one of said subscriber domains comprises at least one mobile communication device or at least one fixed telecommunication device.

3. Telecommunication network according to claim 1 or 2, wherein said means (ICM) for determining the availability of at least one of said fixed telephone means (FT) comprises means for checking at least one register (REG2) associated with said fixed telephone means (FT1, FT2).

4. Telecommunication network according to claims 1 - 3, wherein the availability of said at least one subscriber (S) at an associated fixed telephone device is established partly or completely by means of a detection arrangement.

5. Telecommunication network according to claims 1-4, wherein the means (ICM) for determining the availability of at least one mobile communication device (MD) associated with at least one subscriber (S1,..,S4) comprises means for accessing availability codes (A-code) comprised by the mobile network.

6. Telecommunication network according to claim 1-5, wherein said availability codes (A-codes) are comprised by a Home Location Register (HLR) of a GSM-network.

7. Telecommunication network according to claims 1-6, wherein availability is weighted by further availability parameters.

8. Telecommunication network according to claims 1-7, wherein the intelligent call manager (ICM) comprises display means (DM) for displaying the availability status of the subscribers (S1,..,S4) managed by said call manager (ICM).

9. Method of handling at least one incoming call to a least one subscriber (S1,..,S4), said method comprising the steps of
- determining the availability of said at least one subscriber (S1,..,S4) on at least one fixed telephone (FT) according to at least one availability criteria (AC)
- routing the incoming call to the at least one fixed telephone (FT) of the at least one subscriber (S1,..,S4) if the subscriber is available on the at least one fixed telephone (FT),
- determining the availability of said at least one subscriber (S1,..,S4) on at least one mobile telephone (MD) according to at least one further availability criteria (FAC) if the subscriber is not available on the at least one fixed telephone (FT),
- routing the incoming call to the at least one mobile device (MD) of the subscriber (S1,..,S4) if the subscriber is available on the at least one mobile device (MD).

10. Method of handling at least one incoming call to said at least one subscriber (S1,..,S4), said method comprising the steps of
- determining the availability of said at least one subscriber (S1,..,S4) on at least one fixed telephone (FT) according to at least one availability criteria (AC)
- determining the availability of said at least one subscriber (S1,..,S4) on at least one mobile telephone (MD) according to at least one further availability criteria (FAC) if the subscriber is not available on the at least one fixed telephone (FT),
- routing the incoming call to the device at which the subscriber is available.

11. Method of controlling a telecommunication network (S1,..,S4) according to claims 1-8, wherein said method comprises the step of
- directing an incoming call to a subscriber domain (SD) and to an available device (FT, MD) within that domain.

12. Method of determining the availability of said at least one subscriber (S1,..,S4), said at least one subscriber (S1,..,S4) defining a subscriber domain comprising at least one fixed telephone (FT) and at least one mobile communication device (MD)
said method comprising the steps of
(a) determining the availability of said at least one subscriber (S1,..,S4) on at least one fixed telephone (FT) according to at least one availability criteria (AC)
(b) determining availability of said at least one subscriber (S1,..,S4) on at least one mobile communication device (MD) according to at least one further availability criteria (FAC).

13. Switchboard system for monitoring the availability of said at least one subscriber dedicated to a subscriber domain (SD), said subscriber domain comprising at least one mobile communication device (MD) and preferably at least one fixed telephone (FT), said switchboard system comprising display means (DM) for displaying availability of the at least one subscriber domain (SD).

14. Switchboard system for managing incoming calls to a local network of subscriber domains (SD), at least one of said subscriber domains comprising at least one mobile communication device (MD) and preferably at least one fixed telephone (FT),
said switchboard system comprising or communicating with means for automatically routing an incoming call according to predefined automatic routines depending on the availability of the called subscriber.

15. Method of managing subscribers (S) in a telecommunication network,
said at least one subscriber (S1,..,S4) being associated with a subscriber domain (SD1,..SD4) comprising
at least one fixed telephone device (FT) and at
least one mobile communication device (MD)
said method comprising the step of routing incoming signals from said fixed telephone device (FT) to at least one of said mobile communication devices (MD) if the fixed telephone device (FT) of a subscriber domain (SD) is unavailable.
